# EUROPEAN PATENT APPLICATION

(11) **EP 4 830 938 A1**
(43) Date of publication of application: **28.10.2026**
(21) Application number: 24907114.3
(22) Date of filing: 28.11.2024
(51) Int. Cl.: B43K 29/02

(54) **WRITING IMPLEMENT**

(30) Priority: 21.12.2023 JP 2023215414
(71) Applicant: Kabushiki Kaisha Pilot Corporation (also trading as Pilot Corporation), Tokyo 104-8304 (JP)
(72) Inventor: HAYAKAWA, Hisatoshi, Tokyo 104-8304 (JP)
(74) Representative: Hoffmann Eitle
(86) International application number: PCT/JP2024/042195
(87) International publication number: WO 2025/134727

(57) **Abstract**

A stationery item includes a member and a friction body. The member includes an end wall, a first cylinder protruding from the end wall in a first direction, and a second cylinder protruding from the end wall in a second direction opposite to the first direction. The end wall is provided with a through hole allowing communication between a space inside the first cylinder and a space inside the second cylinder. The friction body includes a base in contact with an end of the second cylinder in the second direction, an outer portion extending from the base, surrounding the second cylinder, and in contact with the end wall and the second cylinder, and an inner portion extending from the base, surrounded by the second cylinder, and in contact with the end wall and the second cylinder. The friction body is capable of inducing a thermochromic change in handwriting written with a thermochromic ink by frictional heat generated by rubbing the handwriting written with the thermochromic ink.

## Description

### TECHNICAL FIELD

Embodiments of the present invention relate to a stationery item.

### BACKGROUND ART

Conventionally, a writing instrument for writing with a thermochromic ink is known. Handwriting using the thermochromic ink is thermally discolored to transparent or another color by, for example, frictional heat generated by being rubbed by a friction body. The friction body is provided at an end of a member such as a barrel or a cap by, for example, double-molding.

### SUMMARY OF INVENTION

### PROBLEM TO BE SOLVED BY THE INVENTION

However, shapes of a member and a friction body have been studied such that a friction body is less likely to come off from an end of the member when rubbing handwriting. On the other hand, when the end of a cylindrical member is closed, it may be difficult to stabilize a position of an inner mold (core) with respect to an outer mold (cavity).

An example of the problem to be solved by the present invention is to provide a stationery item that can improve moldability of the member capable of suppressing separation of the friction body.

### MEANS FOR SOLVING PROBLEM

A stationery item according to an embodiment of the present invention includes: a member including an end wall, a first cylinder protruding from the end wall in a first direction, and a second cylinder protruding from the end wall in a second direction opposite to the first direction, the end wall being provided with a through hole allowing communication between a space inside the first cylinder and a space inside the second cylinder; and a friction body including a base in contact with an end of the second cylinder in the second direction, an outer portion extending from the base, surrounding the second cylinder, and in contact with the end wall and the second cylinder, and an inner portion extending from the base, surrounded by the second cylinder, and in contact with the end wall and the second cylinder, the friction body being capable of inducing a thermochromic change in handwriting written with a thermochromic ink by frictional heat generated by rubbing the handwriting written with the thermochromic ink.

### EFFECT OF THE INVENTION

According to the present invention, for example, moldability of a member capable of suppressing separation of a friction body can be improved.

### BRIEF DESCRIPTION OF DRAWINGS

FIG. 1 is a side view illustrating a writing instrument according to a first embodiment;
FIG. 2 is a cross-sectional view of the writing instrument according to the first embodiment taken along line F2-F2 in FIG. 1;
FIG. 3 is a cross-sectional view illustrating a periphery of an end of a rear barrel in the writing instrument according to the first embodiment;
FIG. 4 is a perspective view illustrating the periphery of the end of the rear barrel according to the first embodiment;
FIG. 5 is a cross-sectional view illustrating a mold for forming the rear barrel according to the first embodiment;
FIG. 6 is a cross-sectional view illustrating a mold for forming a friction body according to the first embodiment;
FIG. 7 is a perspective view illustrating a periphery of an end of a rear barrel according to a second embodiment;
FIG. 8 is a cross-sectional view illustrating a periphery of an end of a rear barrel of a writing instrument according to a third embodiment;
FIG. 9 is a cross-sectional view illustrating a periphery of an end of a rear barrel of a writing instrument according to a fourth embodiment;
FIG. 10 is a perspective view illustrating a periphery of an end of a rear barrel according to a fifth embodiment;
FIG. 11 is a cross-sectional view illustrating the periphery of the end of the rear barrel of a writing instrument according to the fifth embodiment;
FIG. 12 is a perspective view illustrating a periphery of an end of a rear barrel according to a sixth embodiment; and
FIG. 13 is a cross-sectional view illustrating the periphery of the end of the rear barrel of a writing instrument according to the sixth embodiment.

### DESCRIPTION OF EMBODIMENTS

### (First Embodiment)

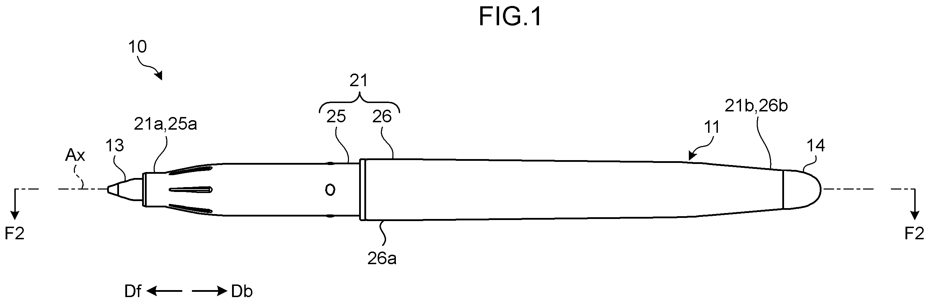

Hereinafter, a first embodiment will be described with reference to FIGS. 1 to 6. Note that, in the present specification, components according to embodiments and descriptions of the components may be described in a plurality of expressions. The components and the description thereof are examples, and are not limited by expressions in the present specification. The components may also be identified with names different from those herein. In addition, the components may be described by expressions different from the expressions in the present specification.

In the following description, "suppressing" is defined as, for example, preventing an occurrence of an event, an action, or an influence, or reducing a degree of an event, an action, or an influence. Furthermore, in the following description, "restrict" is defined as, for example, preventing movement or rotation, or allowing movement or rotation within a predetermined range and preventing movement or rotation beyond the predetermined range.

FIG. 1 is a side view illustrating a thermochromic writing instrument 10 according to the first embodiment. The thermochromic writing instrument (hereinafter referred to as a writing instrument) 10 of the present embodiment is, for example, a marker, and is used for forming (writing) handwriting such as a line, a figure, and a character with a thermochromic ink. The writing instrument 10 is an example of a stationery item. The writing instrument 10 is not limited to the marker. For example, the writing instrument 10 may be a ballpoint pen or a multicore retractable writing instrument. The stationery item is not limited to the writing instrument 10, and may be a stationery item that is not used for writing. For example, the stationery item may be an eraser capable of discoloring or erasing handwriting with the thermochromic ink. Still more, the stationery item may be a stationery item having other functions in addition to a function capable of discoloring or erasing the handwriting with the thermochromic ink.

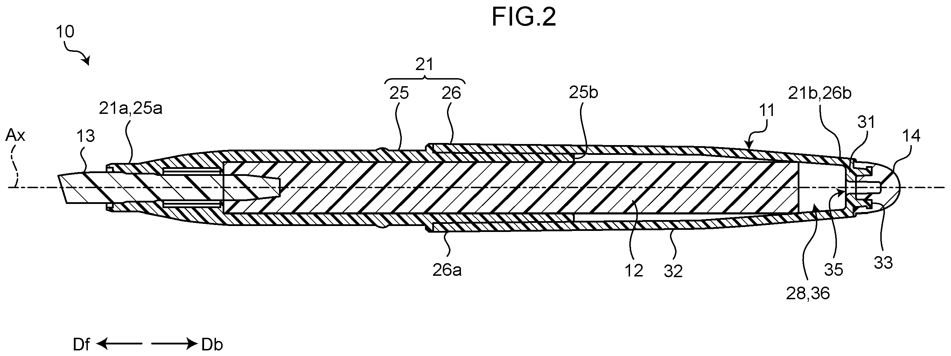

FIG. 2 is a cross-sectional view illustrating the writing instrument 10 according to the first embodiment taken along line F2-F2 in FIG. 1. As illustrated in FIG. 2, the writing instrument 10 includes a barrel 11, an ink occluding body 12, a pen tip 13, and a friction body 14. The friction body 14 may also be referred to as a rubbing member. The writing instrument 10 of the present embodiment is a so-called capped writing instrument, and further includes a cap for protecting the pen tip 13. The writing instrument 10 may be other retractable, side retractable, and rotatable writing instruments capable of accommodating the pen tip 13 inside the barrel 11.

The barrel 11 is formed in a substantially cylindrical shape extending along a central axis Ax. The central axis Ax is a virtual axis located substantially at the center of the barrel 11. In the following description, a direction along the central axis Ax is defined as an axial direction, a direction orthogonal to the central axis Ax is defined as a radial direction, and a direction around the central axis Ax is defined as a circumferential direction.

The axial direction includes a forward direction Df and a backward direction Db. The forward direction Df is one direction included in the axial direction, and is an example of a first direction. The backward direction Db is the other direction included in the axial direction and is a direction opposite to the forward direction Df. The front and back expressions in the present specification are expressions for convenience of description using the pen tip 13 as a reference of "front". Thus, the front and back expressions in the present specification do not limit orientation, position, usage mode, priority, or any other conditions.

The barrel 11 has a barrel body 21. The barrel body 21 is formed in a substantially cylindrical shape extending in the axial direction. An end 21a of the barrel body 21 in the forward direction Df is open. On the other hand, an end 21b of the barrel body 21 in the backward direction Db is closed by the friction body 14. The barrel body 21 has a front barrel 25 and a rear barrel 26. The front barrel 25 may also be referred to as a grip barrel. The rear barrel 26 may also be referred to as a trunk barrel. The rear barrel 26 is an example of a member. The member may be other members such as a cap.

The front barrel 25 is made of, for example, a synthetic resin. The front barrel 25 may be made of other materials. The front barrel 25 extends in the axial direction and is formed in a substantially cylindrical shape in which an end 25a in the forward direction Df and an end 25b in the backward direction Db are open. The end 25a of the front barrel 25 forms the end 21a of the barrel body 21 in the forward direction Df.

The rear barrel 26 is made of, for example, an ABS resin, a polycarbonate (PC) resin, a polypropylene (PP) resin, a polybutylene terephthalate (PBT) resin, or a synthetic resin such as nylon 6,6. The rear barrel 26 may be made of other materials. The material of the rear barrel 26 may be the same as or different from the material of the front barrel 25.

The rear barrel 26 extends in the axial direction and is formed in a substantially cylindrical shape in which an end 26a in the forward direction Df and an end 26b in the backward direction Db are open. The end 26b of the rear barrel 26 forms the end 21b of the barrel body 21 in the backward direction Db, and is closed by the friction body 14.

The end 25b of the front barrel 25 in the backward direction Db and the end 26a of the rear barrel 26 in the forward direction Df are fitted to each other. For example, the end 25b of the front barrel 25 in the backward direction Db is fixed inside the end 26a of the rear barrel 26 in the forward direction Df by screwing or press-fitting. As a result, a space 28 that is open at the end 21a is formed inside the barrel body 21.

The ink occluding body 12 is accommodated in the space 28 inside the barrel body 21. The ink occluding body 12 stores a thermochromic ink. The thermochromic ink is, for example, a reversible thermochromic ink. The reversible thermochromic ink includes various reversible thermochromic inks such as a heat-decoloring type in which a color is decolored by heating from a color developed state, a color-memory retention type in which a color developed state or a decolored state is alternately stored and retained in a specific temperature range, and a heat-coloring type in which color is developed from a decolored state by heating and returns from the color developed state to the decolored state by cooling.

The reversible thermochromic ink has, for example, a reversible thermochromic microcapsule pigment as a coloring material. The reversible thermochromic microcapsule pigment contains a reversible thermochromic composition contained in microcapsules. The reversible thermochromic composition contains at least three components of an electron-donating color-developing organic compound, an electron-accepting compound, and a reaction medium that determines an occurrence temperature of a color reaction between both the compounds. The thermochromic ink is not limited to the above examples.

The pen tip 13 is provided at the end 21a of the barrel body 21 in the forward direction Df. The pen tip 13 is connected to the ink occluding body 12 inside the barrel body 21. The pen tip 13 dispenses the thermochromic ink stored in the ink occluding body 12 inside the barrel body 21.

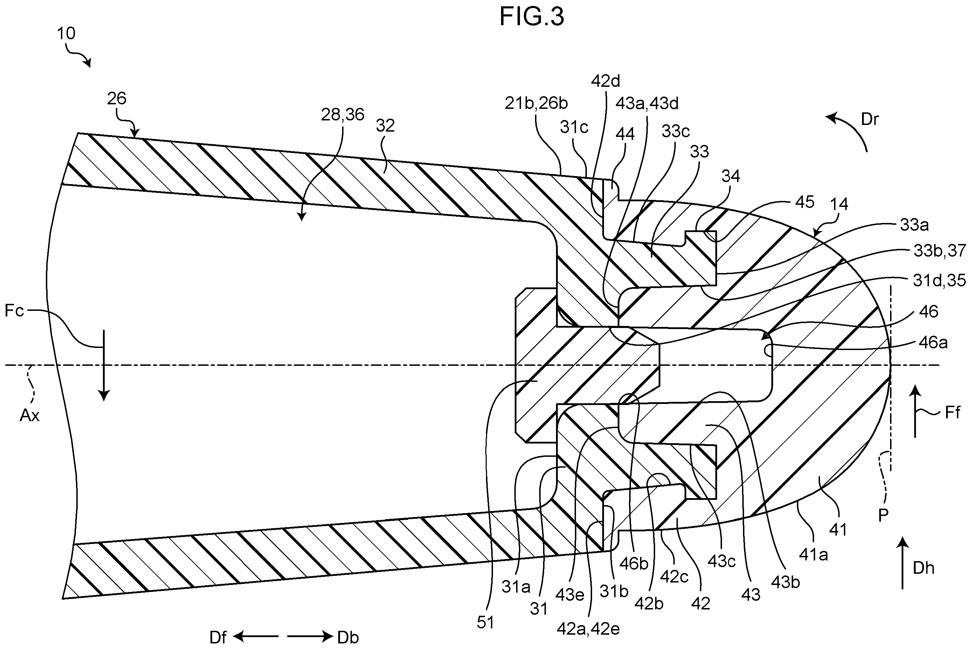

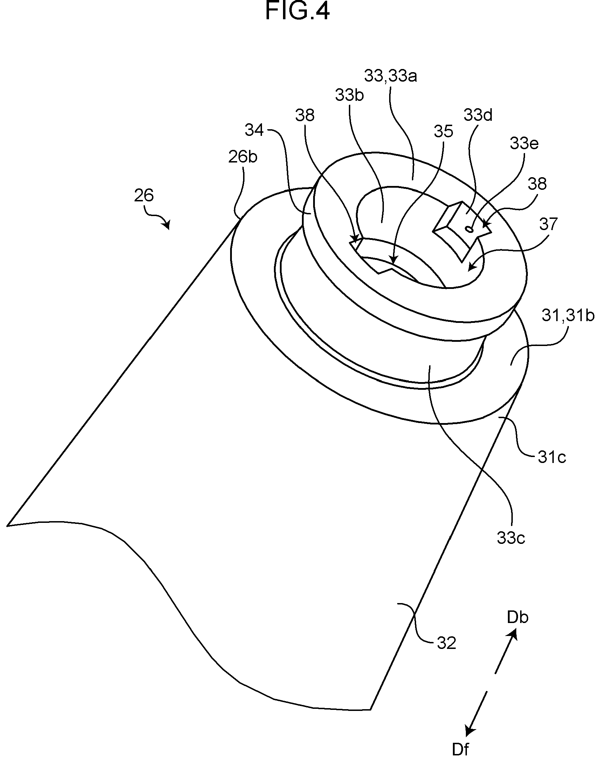

FIG. 3 is a cross-sectional view illustrating a periphery of the end 26b of the rear barrel 26 in the writing instrument 10 according to the first embodiment. FIG. 4 is a perspective view illustrating the periphery of the end 26b of the rear barrel 26 according to the first embodiment. As illustrated in FIG. 3, the rear barrel 26 includes an end wall 31, a main cylinder 32, a rear end cylinder 33, and a protrusion 34. The main cylinder 32 is an example of a first cylinder. The rear end cylinder 33 is an example of a second cylinder. The protrusion 34 is an example of a first protrusion.

In the present embodiment, the end wall 31, the main cylinder 32, the rear end cylinder 33, and the protrusion 34 are integrally formed. Note that at least one of the end wall 31, the main cylinder 32, the rear end cylinder 33, and the protrusion 34 may be formed as a component different from other portions.

The end wall 31, the rear end cylinder 33, and the protrusion 34 are provided at the end 21b of the barrel body 21 (end 26b of the rear barrel 26). The ends 21b and 26b include not only ends of the barrel body 21 and the rear barrel 26 in the backward direction Db but also a periphery of the ends.

The end wall 31 is formed in, for example, a disk shape substantially orthogonal to the central axis Ax. The end wall 31 has an inner surface 31a, an outer surface 31b, and an outer peripheral surface 31c. The inner surface 31a is formed substantially flat and faces the forward direction Df. The outer surface 31b is located on the opposite side of the inner surface 31a. The outer surface 31b is formed substantially flat and faces the backward direction Db. The inner surface 31a and the outer surface 31b may be curved surfaces or may have irregularities. The outer peripheral surface 31c is a cylindrical curved surface extending along the central axis Ax between the inner surface 31a and the outer surface 31b, and faces outward in the radial direction.

The main cylinder 32 protrudes in the forward direction Df from the end wall 31. The main cylinder 32 is formed in a substantially cylindrical shape extending along the central axis Ax. Specifically, the main cylinder 32 has a cylindrical portion having a constant diameter and a conical cylindrical portion extending from the cylindrical portion in a tapered manner in the backward direction. For example, characters, pictures, and patterns are transferred onto the main cylinder 32. When the front barrel 25 and the rear barrel 26 are coupled to each other by screwing, a female screw is provided in the main cylinder 32. The main cylinder 32 is not limited to this example.

The main cylinder 32 protrudes in the forward direction Df from an outer edge of the inner surface 31a. Therefore, the main cylinder 32 is continuous with the outer peripheral surface 31c of the end wall 31. The end wall 31 closes an end in the backward direction Db of the main cylinder 32 having a substantially cylindrical shape.

The rear end cylinder 33 protrudes in the backward direction Db from the end wall 31. The rear end cylinder 33 is formed in a substantially cylindrical shape extending along the central axis Ax. A diameter of the rear end cylinder 33 is smaller than a diameter of the main cylinder 32. The rear end cylinder 33 has an end surface 33a, an inner peripheral surface 33b, and an outer peripheral surface 33c.

The end surface 33a is provided at an end in the backward direction Db of the rear end cylinder 33. Therefore, the end surface 33a is an example of an end of the second cylinder in a second direction. The end surface 33a is located at an end of the barrel 11 in the backward direction Db. The end surface 33a is a substantially annular plane and faces the backward direction Db. The end surface 33a may be a curved surface.

The inner peripheral surface 33b is a substantially cylindrical curved surface extending along the central axis Ax between an inner edge of the end surface 33a having an annular shape and the outer surface 31b of the end wall 31. The inner peripheral surface 33b faces inward in the radial direction. In other words, the inner peripheral surface 33b faces the central axis Ax.

The outer peripheral surface 33c is located on an opposite side of the inner peripheral surface 33b. The outer peripheral surface 33c is a substantially cylindrical curved surface extending along the central axis Ax between an outer edge of the end surface 33a having the annular shape and the outer surface 31b of the end wall 31. The outer peripheral surface 33c faces outward in the radial direction. A diameter of the outer peripheral surface 33c is smaller than an outer diameter of the outer surface 31b. In other words, the rear end cylinder 33 is spaced apart from the outer peripheral surface 31c of the end wall 31.

The protrusion 34 protrudes outward in the radial direction from the outer peripheral surface 33c of the rear end cylinder 33 at a position spaced apart from the end wall 31 in the backward direction Db. Outward in the radial direction is an example of a direction intersecting the second direction. The protrusion 34 may protrude from the rear end cylinder 33 in a direction obliquely intersecting the central axis Ax.

In the present embodiment, the protrusion 34 protrudes from an end of the rear end cylinder 33 in the backward direction Db. As illustrated in FIG. 4, the protrusion 34 is provided over an entire circumference of the outer peripheral surface 33c around the central axis Ax. Therefore, an end (tip) of the protrusion 34 on the outer side in the radial direction is formed in a substantially annular shape. As illustrated in FIG. 3, a diameter of the tip of the protrusion 34 is smaller than the outer diameter of the outer surface 31b.

The protrusion 34 may be provided on a portion of the outer peripheral surface 33c around the central axis Ax. For example, a plurality of protrusions 34 may protrude from the outer peripheral surface 33c, and the plurality of protrusions 34 may be arranged at intervals in the circumferential direction.

A through hole 35 is provided in the end wall 31. The through hole 35 is a substantially circular hole penetrating the end wall 31 along the central axis Ax. Thus, the through hole 35 allows communication between a space 36 inside the main cylinder 32 and a space 37 inside the rear end cylinder 33. The space 36 inside the main cylinder 32 is included in the space 28 inside the barrel body 21.

The end wall 31 further has an inner peripheral surface 31d that forms (defines or partitions) the through hole 35. The inner peripheral surface 31d is located on the opposite side of the outer peripheral surface 31c. The inner peripheral surface 31d is a substantially cylindrical curved surface extending along the central axis Ax between the inner surface 31a and the outer surface 31b, and faces inward in the radial direction.

A diameter of the inner peripheral surface 33b of the rear end cylinder 33 is larger than a diameter of the through hole 35 (inner peripheral surface 31d). In other words, the rear end cylinder 33 is spaced apart from the through hole 35 (inner peripheral surface 31d). In the present embodiment, the rear end cylinder 33 is located substantially at the center between the outer peripheral surface 31c and the inner peripheral surface 31d of the end wall 31. The rear end cylinder 33 is not limited to this example.

As illustrated in FIG. 4, two notches 38 are provided in the rear end cylinder 33. The notches 38 are recessed from a corner between the end surface 33a and the inner peripheral surface 33b of the rear end cylinder 33. The two notches 38 are arranged at equal intervals (every 180°) in the circumferential direction. The rear end cylinder 33 further has a recessed surface 33d forming each of the two notches 38.

The friction body 14 is made of, for example, a material containing an elastic synthetic resin (elastomer) such as a silicone resin, a styrene-butadiene-styrene copolymer (SBS) resin, a styrene-ethylene-butylene-styrene copolymer (SEBS) resin, a fluorine-based resin, a chloroprene resin, a nitrile resin, a polyester-based resin, and an ethylene propylene diene rubber (EPDM). The material of the friction body 14 may contain a plurality of elastomers. Still more, the material of the friction body 14 may be a mixture of an elastomer and a synthetic resin having relatively small elasticity. The material of the friction body 14 is a low-wear elastic material that generates less wear debris (eraser debris) due to wear than a high-wear elastic material such as an eraser.

In the present embodiment, the friction body 14 is made of a material permeable to gas. In other words, the friction body 14 has a lower gas barrier property (higher gas permeability) than the rear barrel 26 and allows gas to easily pass therethrough. The material of the friction body 14 is not limited to the above example.

As illustrated in FIG. 3, the friction body 14 includes a head 41, an outer cylinder portion 42, an inner cylinder portion 43, and a flange 44. The head 41 is an example of a base. The outer cylinder portion 42 is an example of an outer portion. The inner cylinder portion 43 is an example of an inner portion. The head 41, the outer cylinder portion 42, the inner cylinder portion 43, and the flange 44 are integrally formed.

The head 41 is a portion of the friction body 14 behind the end surface 33a of the rear end cylinder 33, and is in contact with the end surface 33a of the rear end cylinder 33. In the present specification, the contact does not need to be a contact on the entire surface unless otherwise specified, and may be at least a partial contact.

The head 41 is formed in a substantially hemispherical shape protruding in the backward direction Db from the end surface 33a of the rear end cylinder 33. Therefore, the head 41 has an outer surface 41a of the substantially hemispherical shape. The outer surface 41a is exposed to the outside of the writing instrument 10 and comes into contact with handwriting when the friction body 14 rubs the handwriting. The shape of the head 41 is not limited to this example.

The outer cylinder portion 42 is formed in a cylindrical shape extending in the substantially forward direction Df from the head 41 along the central axis Ax. The outer cylinder portion 42 surrounds the rear end cylinder 33. The outer cylinder portion 42 has an end surface 42a, an inner peripheral surface 42b, and an outer peripheral surface 42c.

The end surface 42a is provided at an end of the outer cylinder portion 42 in the forward direction Df. Still more, the end surface 42a is located at an end of the friction body 14 in the forward direction Df. The end surface 42a is a substantially annular plane and faces the forward direction Df. The end surface 42a may be a curved surface. The end surface 42a is in contact with the outer surface 31b of the end wall 31 between the outer peripheral surface 31c of the end wall 31 and the rear end cylinder 33.

The inner peripheral surface 42b is a substantially cylindrical curved surface extending along the central axis Ax between an inner edge of the end surface 42a having the annular shape and the head 41. The inner peripheral surface 42b faces inward in the radial direction. In other words, the inner peripheral surface 42b faces the central axis Ax. The inner peripheral surface 42b is in contact with the outer peripheral surface 33c of the rear end cylinder 33.

The outer peripheral surface 42c is located on the opposite side of the inner peripheral surface 42b. The outer peripheral surface 42c is a substantially cylindrical curved surface extending along the central axis Ax between an outer edge of the end surface 42a having the annular shape and the outer surface 41a of the head 41. The outer peripheral surface 42c faces outward in the radial direction and is continuous with the outer surface 41a of the head 41. The diameter of the outer peripheral surface 42c is equal to or smaller than the outer diameter of the outer surface 31b of the end wall 31.

The inner cylinder portion 43 is formed in a cylindrical shape extending in the substantially forward direction Df from the head 41 along the central axis Ax. The inner cylinder portion 43 is surrounded by the outer cylinder portion 42. In other words, the outer cylinder portion 42 and the inner cylinder portion 43 are double cylinders concentric (coaxial) with each other.

The inner cylinder portion 43 is surrounded by the rear end cylinder 33. The friction body 14 may have a solid portion surrounded by the rear end cylinder 33 instead of the inner cylinder portion 43. The inner cylinder portion 43 has an end surface 43a, an inner peripheral surface 43b, and an outer peripheral surface 43c.

The end surface 43a is provided at an end of the inner cylinder portion 43 in the forward direction Df. The end surface 43a is a substantially annular plane and faces the forward direction Df. The end surface 43a may be a curved surface. The end surface 43a contacts the outer surface 31b of the end wall 31 between the inner peripheral surface 31d (through hole 35) of the end wall 31 and the rear end cylinder 33.

The inner peripheral surface 43b is a substantially cylindrical curved surface extending along the central axis Ax between an inner edge of the end surface 43a having the annular shape and the head 41. The inner peripheral surface 43b faces inward in the radial direction. In other words, the inner peripheral surface 43b faces the central axis Ax.

The outer peripheral surface 43c is located on the opposite side of the inner peripheral surface 43b. The outer peripheral surface 43c is a substantially cylindrical curved surface extending along the central axis Ax between an outer edge of the end surface 43a having the annular shape and the head 41. The outer peripheral surface 43c faces outward in the radial direction. The inner peripheral surface 42b of the outer cylinder portion 42 and the outer peripheral surface 43c of the inner cylinder portion 43 face each other with a space therebetween.

A portion of the inner cylinder portion 43 is fitted into the two notches 38 of the rear end cylinder 33 and comes into contact with the recessed surface 33d. As a result, the recessed surface 33d restricts relative rotation, with respect to the rear barrel 26, of the friction body 14 around the central axis Ax.

The flange 44 protrudes outward in the radial direction from an end of the outer peripheral surface 42c in the forward direction Df. The flange 44 is provided over an entire circumference of the outer peripheral surface 42c around the central axis Ax. Therefore, an end (tip) of the flange 44 on the outer side in the radial direction is formed in a substantially annular shape. A diameter of the tip of the flange 44 is substantially equal to the outer diameter of the outer surface 31b of the end wall 31. The flange 44 may be omitted.

The friction body 14 is provided with a recess 45 and a depression 46. The recess 45 is an example of a first recess. The recess 45 is provided at an end of the inner peripheral surface 42b of the outer cylinder portion 42 in the backward direction Db. The recess 45 has a shape corresponding to the protrusion 34 of the rear end cylinder 33 and is recessed from the inner peripheral surface 42b. In other words, the recess 45 is an annular groove provided over an entire circumference of the inner peripheral surface 42b around the central axis Ax. The protrusion 34 is fitted into the recess 45 to be caught by the outer cylinder portion 42, thereby restricting displacement of the friction body 14 in the backward direction Db with respect to the barrel 11.

The depression 46 is provided inside the inner cylinder portion 43 having a cylindrical shape. In the present embodiment, the depression 46 extends along the central axis Ax across the head 41 and the inner cylinder portion 43. Therefore, in the axial direction, an end 46a of the depression 46 in the backward direction Db is spaced apart from the end surface 33a of the rear end cylinder 33 in the backward direction Db.

An end 46b of the depression 46 in the forward direction Df opens to the outside of the friction body 14 on the end surface 43a of the inner cylinder portion 43. The end 46b of the depression 46 communicates with the through hole 35 of the end wall 31. A diameter of the depression 46 is substantially the same as a diameter of the through hole 35. On the other hand, the depression 46 is spaced apart from the outer surface 41a of the head 41. In other words, the end 46a of the depression 46 in the backward direction Db is closed.

The writing instrument 10 further includes a plug 51. The plug 51 is made of, for example, a synthetic resin. The plug 51 has a higher gas barrier property than the friction body 14 and hardly allows gas to pass therethrough. The plug 51 is fitted into the through hole 35, for example, by press fitting to hermetically seal the through hole 35.

The rear barrel 26 of the barrel body 21 and the friction body 14 are integrally formed by, for example, double-molding. Therefore, the outer surface 31b of the end wall 31, the end surface 33a, the inner peripheral surface 33b, and the outer peripheral surface 33c of the rear end cylinder 33, and the protrusion 34 come into contact with the friction body 14 with substantially no gap therebetween. There may be a gap between the rear barrel 26 and the friction body 14.

For example, two members formed by double-molding are joined, coupled, or attached to each other by a combination of materials of the two members. In the present embodiment, the rear barrel 26 and the friction body 14 are not joined, coupled, or attached. For example, when the rear barrel 26 is made of PC resin and the friction body 14 is made of SEBS resin, the rear barrel 26 and the friction body 14 are not joined, coupled, or attached to each other.

The rear barrel 26 and the friction body 14 may be joined, coupled, or attached to each other. For example, when the rear barrel 26 is made of PP resin and the friction body 14 is made of SEBS resin, the rear barrel 26 and the friction body 14 are joined, coupled, or attached to each other.

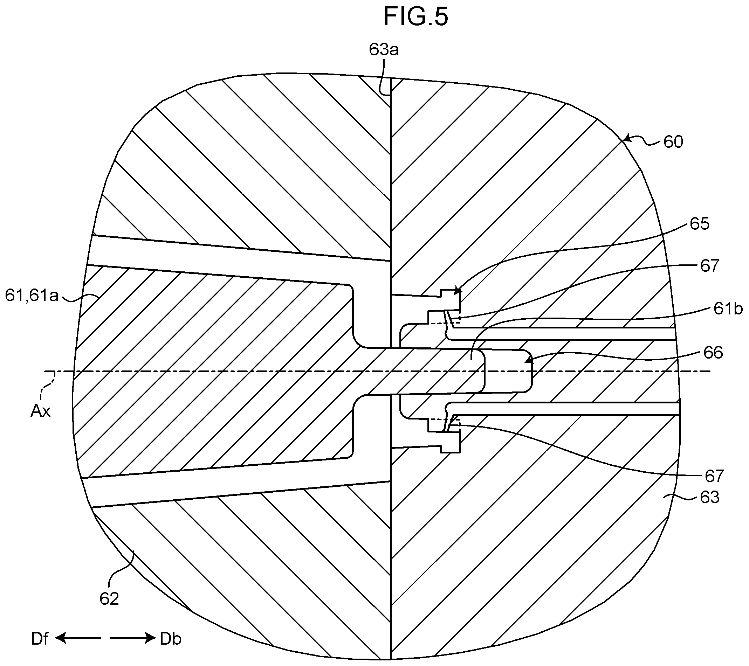

FIG. 5 is a cross-sectional view illustrating a mold 60 for forming the rear barrel 26 of the first embodiment. As illustrated in FIG. 5, the mold 60 for forming the rear barrel 26 includes a core 61 and two cavities 62 and 63.

The core 61 includes a main column 61a and a pin 61b. The main column 61a is formed in a substantially columnar shape extending along the central axis Ax and forms the space 36 inside the main cylinder 32. The pin 61b is formed in a substantially columnar shape protruding in the backward direction Db along the central axis Ax from an end of the main column 61a in the backward direction Db. The pin 61b forms the through hole 35 of the end wall 31.

The cavity 62 surrounds the main column 61a and a portion of the pin 61b via a gap. A hollow space between the main column 61a and the cavity 62 forms the main cylinder 32.

The cavity 63 has an end surface 63a. The end surface 63a is, for example, a plane facing the forward direction Df, and abuts on the cavity 62. The end surface 63a is spaced apart from the main column 61a of the core 61 in the backward direction Db. A hollow space between the main column 61a of the core 61 and the end surface 63a of the cavity 63 forms the end wall 31.

The cavity 63 is provided with a groove 65 and a hole 66. The groove 65 and the hole 66 are recessed from the end surface 63a. The groove 65 is formed in a substantially annular shape extending in the circumferential direction and forms the rear end cylinder 33. The hole 66 extends along the central axis Ax and is surrounded by the groove 65.

The pin 61b of the core 61 is fitted into the hole 66 of the cavity 63. The cavity 63 supports the pin 61b fitted into the hole 66. The core 61 is supported, for example, at least at two points: an end of the core 61 in the forward direction Df and the pin 61b that is an end of the core 61 in the backward direction Db. The cavity 63 supports the pin 61b to restrict the core 61 from being displaced in the radial direction or tilted with respect to the cavities 62 and 63.

The cavity 63 is further provided with two gates 67. The two gates 67 communicate with the groove 65. In the present embodiment, the two gates 67 communicate with a portion forming the notch 38 of the rear end cylinder 33 in the groove 65. Therefore, as illustrated in FIG. 4, the rear end cylinder 33 has a gate mark 33e accommodated in the notch 38. The gate mark 33e protrudes from a portion of the recessed surface 33d facing inward in the radial direction. The gate mark 33e may protrude from another portion of the recessed surface 33d.

A material is injected from the gate 67 into a hollow space of the mold 60. The material flows through the hollow space of the mold 60 and fills the hollow space. The core 61 is pushed in the radial direction by the material flowing. However, since the pin 61b is supported by the cavity 63, the core 61 can be prevented from being tilted and displaced.

In the mold 60, the gate 67 is located between the groove 65 and the hole 66. For example, the depression 46, the pin 61b, and the hole 66 may be tapered in the backward direction Db. In this case, the hole 66 can be prevented from approaching the gate 67 or a runner, and the cavity 63 can be easily designed.

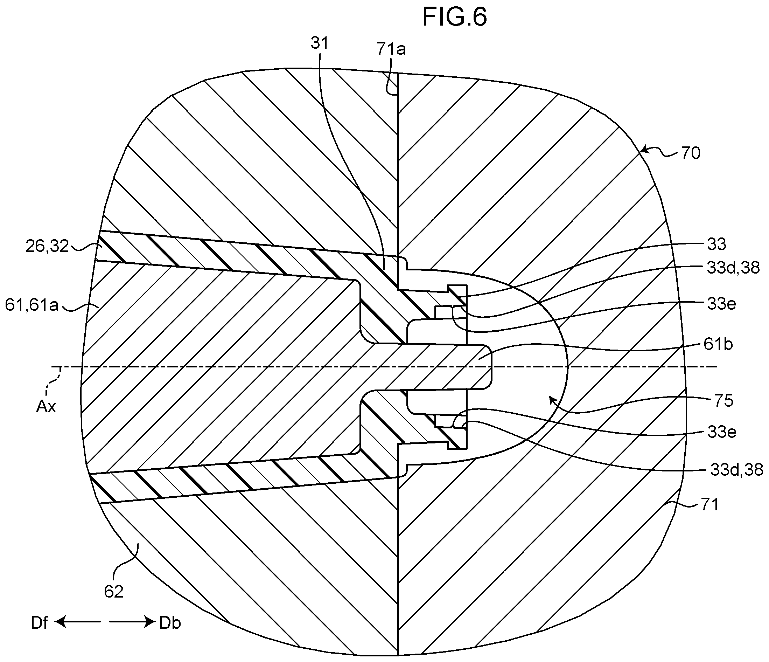

FIG. 6 is a cross-sectional view illustrating a mold 70 for forming the friction body 14 of the first embodiment. After the rear barrel 26 is formed, the friction body 14 is then formed. The mold 70 for forming the friction body 14 includes, for example, the core 61 and the cavity 62 for forming the rear barrel 26, and another cavity 71. In other words, the core 61 and the cavity 62 are used in both the formation of the rear barrel 26 and the formation of the friction body 14. Note that the manufacture of the rear barrel 26 and the friction body 14 is not limited to this example.

The cavity 71 has an end surface 71a. The end surface 71a is, for example, a plane facing the forward direction Df, and abuts on the cavity 62. A hole 75 is provided in the cavity 71. The hole 75 is recessed from the end surface 71a. The rear end cylinder 33 and the pin 61b are accommodated in the hole 75.

A material is injected into a hollow space in the mold 70. The material flows through the hollow space in the mold 70 and fills the hollow space. The pin 61b located in the hollow space in the mold 70 (hole 75 of the cavity 71) forms the depression 46 of the friction body 14. As described above, the rear barrel 26 and the friction body 14 are formed by double-molding.

A method of double-molding of the rear barrel 26 and the friction body 14 is not limited to the above example. The friction body 14 may be molded separately from the rear barrel 26 and attached to the rear barrel 26. However, by integrally forming the friction body 14 with the rear barrel 26 by double-molding, the friction body 14 can be easily molded, firmly attached to the rear barrel 26, and can also suppress impairment of an appearance of the writing instrument 10.

The writing instrument 10 described above forms handwriting with the thermochromic ink by dispensing the thermochromic ink from the pen tip 13. Furthermore, the friction body 14 can thermally discolor handwriting written with the thermochromic ink by frictional heat generated by rubbing the handwriting written with the thermochromic ink. The friction body 14 may thermally discolor handwriting with the thermochromic ink formed by a writing instrument different from the writing instrument 10.

As illustrated in FIG. 3, when the friction body 14 rubs the handwriting, the writing instrument 10 is generally held by a writing person (user) in a posture substantially perpendicular or inclined to a paper surface P on which the handwriting is formed. In this state, the outer surface 41a of the head 41 of the friction body 14 comes into contact with the paper surface P and is moved substantially parallel to the paper surface P. Therefore, when the friction body 14 rubs the handwriting, a load substantially in the radial direction acts on the head 41 of the friction body 14. For example, a load Ff in a lateral load direction Dh illustrated in FIG. 3 acts on the head 41 of the friction body 14.

In an example in FIG. 3, the lateral load direction Dh is a direction substantially orthogonal to the axial direction (the forward direction Df and the backward direction Db). Note that the direction in which the load acts on the friction body 14 that rubs the handwriting is not limited to this example.

While the load Ff in the lateral load direction Dh acts on the friction body 14 by friction, a load Fo in a direction opposite to the lateral load direction Dh acts on the rear barrel 26 by the writing person. Therefore, the load Ff acting on the friction body 14 by friction elastically deforms the friction body 14 so as to be relatively displaced with respect to the rear barrel 26.

Since the load Ff acts on the head 41 of the friction body 14 and the load Fo acts on the rear barrel 26, the friction body 14 is elastically deformed so as to be displaced, for example, in a rotation direction Dr illustrated in FIG. 3. The rotation direction Dr is a direction that is located between the head 41 on which the load Ff acts and a position of the barrel 11 on which the load Fo acts, and is a direction rotating around a rotation axis substantially orthogonal to the axial direction.

When the friction body 14 is approximately displaced in the rotation direction Dr with respect to the barrel 11, a portion 42d of the end surface 42a of the outer cylinder portion 42 and a portion 43d of the end surface 43a of the inner cylinder portion 43 of the friction body 14 are pressed against the outer surface 31b of the end wall 31. On the other hand, another portion 42e of the end surface 42a of the outer cylinder portion 42 and another portion 43e of the end surface 43a of the inner cylinder portion 43 may be spaced apart from the outer surface 31b of the end wall 31. However, the writing instrument 10 of the present embodiment is capable of suppressing separation of the friction body 14 from the end wall 31 as described below.

For example, the rear end cylinder 33 extends in the axial direction and is fitted between the outer cylinder portion 42 and the inner cylinder portion 43. The inner peripheral surface 33b of the rear end cylinder 33 supports the inner cylinder portion 43, and the outer peripheral surface 33c of the rear end cylinder 33 supports the outer cylinder portion 42. The rear end cylinder 33 supports the friction body 14 to restrict displacement of the friction body 14 with respect to the rear barrel 26.

Furthermore, the outer surface 31b of the end wall 31 supports the portion 42d of the end surface 42a of the outer cylinder portion 42 and the portion 43d of the end surface 43a of the inner cylinder portion 43. Still more, the protrusion 34 is fitted into the recess 45 to support the outer cylinder portion 42. The inner peripheral surface 33b and the outer peripheral surface 33c of the rear end cylinder 33, the outer surface 31b of the end wall 31, and the protrusion 34 restrict displacement of the friction body 14 in the rotation direction Dr. Therefore, it is possible to suppress separation of the portion 42e of the end surface 42a of the outer cylinder portion 42 and the portion 43e of the end surface 43a of the inner cylinder portion 43 from the outer surface 31b of the end wall 31.

The protrusion 34 of the present embodiment is located at the end of the rear end cylinder 33 in the backward direction Db and is caught by the outer cylinder portion 42 in the vicinity of a portion where the head 41 and the outer cylinder portion 42 are connected. Therefore, the protrusion 34 can suppress an expansion of the outer cylinder portion 42, and can more effectively support the outer cylinder portion 42.

As described above, the rear barrel 26 and the friction body 14 of the present embodiment are not joined, coupled, or attached to each other. Therefore, when the rear end cylinder 33 and the protrusion 34 are not provided, there is a possibility that the portion 42e of the end surface 42a of the outer cylinder portion 42 and the portion 43e of the end surface 43a of the inner cylinder portion 43 are spaced apart from the outer surface 31b of the end wall 31. However, since the writing instrument 10 of the present embodiment includes the rear end cylinder 33 and the protrusion 34, separation of the friction body 14 from the rear barrel 26 can be suppressed.

When the rear barrel 26 and the friction body 14 are joined, coupled, or attached to each other, the outer cylinder portion 42 and the inner cylinder portion 43 are joined, coupled, or attached to the outer surface 31b of the end wall 31. However, when the friction body 14 rubs handwriting, the friction body 14 is elastically deformed, and a load in a direction away from the outer surface 31b of the end wall 31 acts on the outer cylinder portion 42 and the inner cylinder portion 43. Repeated elastic deformation due to friction may cause the outer cylinder portion 42 and the inner cylinder portion 43 to peel off from the outer surface 31b of the end wall 31. However, the rear end cylinder 33 and the protrusion 34 of the present embodiment can suppress elastic deformation causing displacement of the friction body 14 in the rotation direction Dr, and thus peeling of the outer cylinder portion 42 and the inner cylinder portion 43 from the outer surface 31b of the end wall 31 can be suppressed.

When the friction body 14 repeatedly rubs handwriting, the friction body 14 may be worn depending on a material of the friction body 14 and a usage mode. When the friction body 14 wears, the outer surface 41a of the head 41 approaches the depression 46 and the rear end cylinder 33. When the outer surface 41a of the head 41 reaches the depression 46, the depression 46 communicates with the outer surface 41a and is exposed to the outside. Therefore, the writing person can notice that the friction body 14 is worn and the timing for replacement of the writing instrument 10 or replacement of the friction body 14 has come.

Since the depression 46 extends beyond the end surface 33a of the rear end cylinder 33, the depression 46 appears outside before the rear end cylinder 33. Therefore, even when the friction body 14 wears, the rear end cylinder 33 hardly rubs the paper surface P. Note that it is basically possible to suppress wear by using a low wear material for the friction body 14. However, the friction body 14 may be made of a material that wears.

In the writing instrument 10 according to the first embodiment described above, the rear barrel 26 includes the end wall 31, the main cylinder 32, and the rear end cylinder 33. The main cylinder 32 protrudes from the end wall 31 in the forward direction Df. The rear end cylinder 33 protrudes from the end wall 31 in the backward direction Db opposite to the forward direction Df. The end wall 31 is provided with the through hole 35 that allows communication between the space 36 inside the main cylinder 32 and the space 37 inside the rear end cylinder 33. The friction body 14 includes the head 41, the outer cylinder portion 42, and the inner cylinder portion 43. The head 41 contacts the end surface 33a of the rear end cylinder 33 in the backward direction Db. The outer cylinder portion 42 extends from the head 41, surrounds the rear end cylinder 33, and contacts the end wall 31 and the rear end cylinder 33. The inner cylinder portion 43 extends from the head 41, is surrounded by the rear end cylinder 33, and contacts the end wall 31 and the rear end cylinder 33. The friction body 14 can thermally discolor handwriting with the thermochromic ink by frictional heat generated by rubbing the handwriting written with the thermochromic ink.

In general, when the friction body 14 rubs handwriting with the thermochromic ink, the load Ff in the lateral load direction Dh intersecting the forward direction Df and the backward direction Db may act on the friction body 14 due to the friction. The load Ff attempts to elastically deform the friction body 14 so as to be relatively displaced with respect to the rear end cylinder 33. The outer cylinder portion 42 surrounds the rear end cylinder 33, and the inner cylinder portion 43 is fitted inside the rear end cylinder 33. Therefore, the inner peripheral surface 33b and the outer peripheral surface 33c of the rear end cylinder 33 support the outer cylinder portion 42 and the inner cylinder portion 43 in the lateral load direction Dh, and the friction body 14 can be suppressed from being displaced in the lateral load direction Dh with respect to the rear barrel 26. On the other hand, a portion of the friction body 14 not supported by the rear end cylinder 33 may be displaced with respect to the rear barrel 26. For example, the head 41 of the friction body 14 may be elastically deformed so as to be displaced in the lateral load direction Dh with respect to the rear barrel 26. In this case, the head 41 that has elastically deformed pulls a portion of the outer cylinder portion 42 and the inner cylinder portion 43 in a direction away from the end wall 31 (rotation direction Dr). However, the rear end cylinder 33 also supports the outer cylinder portion 42 and the inner cylinder portion 43 at the end of the rear end cylinder 33 in the backward direction Db. Therefore, the rear end cylinder 33 can suppress separation of the outer cylinder portion 42 and the inner cylinder portion 43 from the end wall 31. Accordingly, the writing instrument 10 of the present embodiment is capable of suppressing separation of the friction body 14 from the rear barrel 26 at the time of friction.

The above-described rear barrel 26 capable of holding the friction body 14 by the rear end cylinder 33 can be manufactured by, for example, injection molding. When the core 61 is tilted or displaced with respect to the cavities 62 and 63 due to a material injected into the mold 60, uneven thickness or bending occurs in the rear barrel 26, which may affect transfer to the rear barrel 26 or assembly of the writing instrument 10. However, in the present embodiment, since the space 36 inside the main cylinder 32 and the space 37 inside the rear end cylinder 33 communicate with each other by the through hole 35, the pin 61b of the core 61 passes through the through hole 35 and can be supported by the cavity 63. A portion of the cavity 63 may pass through the through hole 35 and be supported by the core 61. Since the core 61 and the cavity 63 support each other, the core 61 can be suppressed from being tilted or displaced by, for example, injected material. Therefore, the writing instrument 10 of the present embodiment can improve the moldability of the rear barrel 26 capable of suppressing separation of the friction body 14.

The rear barrel 26 has the protrusion 34. The protrusion 34 protrudes from the rear end cylinder 33 in a direction intersecting the backward direction Db at a position spaced apart from the end wall 31 in the backward direction Db, and is fitted into the recess 45 provided in the outer cylinder portion 42.

For example, the head 41 of the friction body 14 is elastically deformed so as to be displaced in the lateral load direction Dh with respect to the rear barrel 26, thereby pulling a portion of the outer cylinder portion 42 and the inner cylinder portion 43 in a direction away from the end wall 31 (rotation direction Dr). However, since the protrusion 34 of the rear barrel 26 is caught by the recess 45 of the outer cylinder portion 42, it is possible to suppress separation of the outer cylinder portion 42 and the inner cylinder portion 43 from the end wall 31. Accordingly, the writing instrument 10 of the present embodiment is capable of suppressing separation of the friction body 14 from the end wall 31 at the time of friction.

The depression 46 is provided in the friction body 14. The depression 46 extends across the head 41 and the inner cylinder portion 43 and communicates with the through hole 35. Depending on the material of the friction body 14 and the usage mode, there is a possibility that the head 41 of the friction body 14 wears and the depression 46 is exposed to the outside. In this case, the writing person can notice the wear of the friction body 14 based on an exposure of the depression 46. Since the depression 46 is provided not only in the inner cylinder portion 43 but also in the head 41, the depression 46 extends beyond the end (end surface 33a) of the rear end cylinder 33 in the backward direction Db. Therefore, the depression 46 can be exposed ahead of the rear end cylinder 33, thereby suppressing contact between the rear end cylinder 33 exposed and, for example, the paper surface P. Still more, since the depression 46 communicates with the through hole 35 to make the inner cylinder portion 43 of the friction body 14 cylindrical, it is possible to suppress molding defects such as sink marks and voids on the friction body 14. Furthermore, when the friction body 14 is also formed by injection molding, the through hole 35 of the rear barrel 26 and the depression 46 of the friction body 14 can be formed using the common core 61. In other words, the rear barrel 26 and the friction body 14 can be manufactured by double-molding without changing the core 61 between the step of forming the rear barrel 26 and the step of forming the friction body 14.

The plug 51 seals the through hole 35. The ink occluding body 12 is disposed in the space 36 inside the main cylinder 32. In this case, the plug 51 can seal the space 36 inside the main cylinder 32 by sealing the through hole 35. Therefore, the plug 51 can suppress evaporation of ink moisture from the ink occluding body 12. When the writing instrument 10 is a ballpoint pen, a refill may be disposed in the space 36, and the pen tip may be disposed in the space 36 when the barrel body 21 is a cap. The plug 51 can suppress evaporation of ink moisture from the refill or the pen tip.

The friction body 14 is permeable to gas. When the through hole 35 is open, the ink moisture evaporated from the ink occluding body 12 may pass through the through hole 35 and the friction body 14 and be released outside. However, since the writing instrument 10 of the present embodiment seals the through hole 35 with the plug 51, it is possible to suppress evaporation of the ink moisture from the ink occluding body 12.

The rear barrel 26 and the friction body 14 are integrally formed by double-molding. The two rear barrels 26 integrally formed by double-molding are generally in close contact with each other. Therefore, in the writing instrument 10 of the present embodiment, the rear barrel 26 and the friction body 14 can be brought into close contact with each other, thereby suppressing separation of the friction body 14 from the rear barrel 26.

The rear barrel 26 is provided with the notch 38 recessed from the rear end cylinder 33. The friction body 14 is fitted into the notch 38 to be restricted from rotating, with respect to the rear end cylinder 33, about the central axis Ax of the rear end cylinder 33. Accordingly, the writing instrument 10 of the present embodiment is capable of suppressing displacement of the friction body 14 with respect to the rear barrel 26.

### (Second Embodiment)

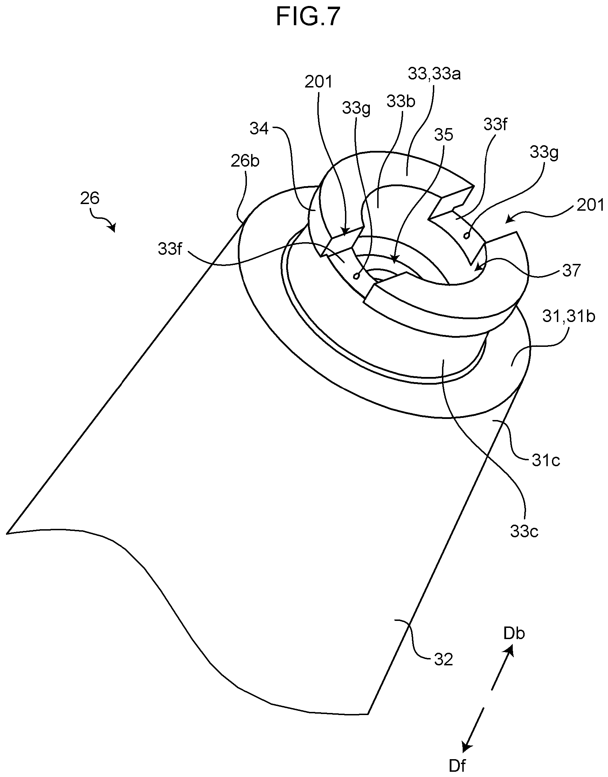

Hereinafter, a second embodiment will be described with reference to FIG. 7. In the following description of a plurality of embodiments, components having functions similar to those of the components already described are denoted by the same reference numerals as those of the components already described, and the description thereof may be omitted. In addition, the plurality of components denoted by the same reference numerals do not necessarily have all the functions and properties in common, and may have different functions and properties according to each embodiment.

FIG. 7 is a perspective view illustrating a periphery of the end 26b of the rear barrel 26 according to the second embodiment. As illustrated in FIG. 7, the rear end cylinder 33 of the second embodiment is provided with two notches 201 instead of the notches 38.

Each of the notches 201 is recessed from the end surface 33a of the rear end cylinder 33 and is open to the inner peripheral surface 33b and the outer peripheral surface 33c. The two notches 201 are arranged at equal intervals (every 180°) in the circumferential direction. The notch 201 divides the protrusion 34 into two in the circumferential direction.

The rear end cylinder 33 has two recessed surfaces 33f and two gate marks 33g instead of the recessed surfaces 33d and the gate marks 33e. The two recessed surfaces 33f form the two notches 201. Each of the two gate marks 33g protrudes from the corresponding recessed surface 33f.

The gate mark 33g is accommodated in the notch 201. The gate mark 33g protrudes from a portion of the recessed surface 33f facing the backward direction Db. Therefore, the gate of the cavity does not need to be provided on an inner side of the rear end cylinder 33 (groove 65), and the cavity can be easily designed.

### (Third Embodiment)

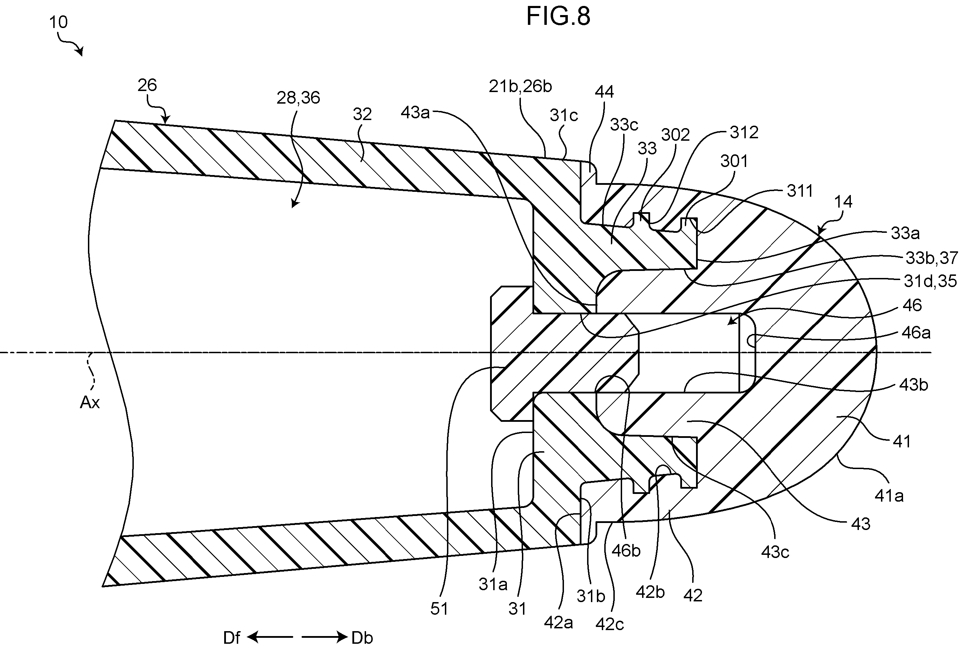

Hereinafter, a third embodiment will be described with reference to FIG. 8. FIG. 8 is a cross-sectional view illustrating a periphery of the end 26b of the rear barrel 26 in the writing instrument 10 according to the third embodiment. As illustrated in FIG. 8, the rear barrel 26 of the third embodiment has two protrusions 301 and 302 instead of the protrusion 34. Furthermore, the friction body 14 is provided with two recesses 311 and 312 instead of the recess 45. The protrusions 301 and 302 and recesses 311 and 312 are substantially equal to the protrusion 34 and recess 45, except as described below.

Similar to the protrusion 34, the protrusion 301 protrudes from the end of the rear end cylinder 33 in the backward direction Db. The protrusion 302 protrudes from the outer peripheral surface 33c of the rear end cylinder 33 at a position spaced apart from the end of the rear end cylinder 33 in the forward direction Df and the backward direction Db. Therefore, the protrusion 302 is spaced apart from the protrusion 301.

Similar to the recess 45, the recess 311 is provided at the end of the inner peripheral surface 42b of the outer cylinder portion 42 in the backward direction Db. The protrusion 301 is fitted into the recess 311. The recess 312 is provided in the inner peripheral surface 42b at a position spaced apart from the end of the outer cylinder portion 42 in the forward direction Df and the backward direction Db. The protrusion 302 is fitted into the recess 312.

The two protrusions 301 and 302 are caught by the outer cylinder portion 42 at two points by being fitted into the recesses 311 and 312. As a result, the protrusions 301 and 302 more effectively restrict the friction body 14 from moving in the backward direction Db or rotating in the rotation direction Dr with respect to the barrel 11.

### (Fourth Embodiment)

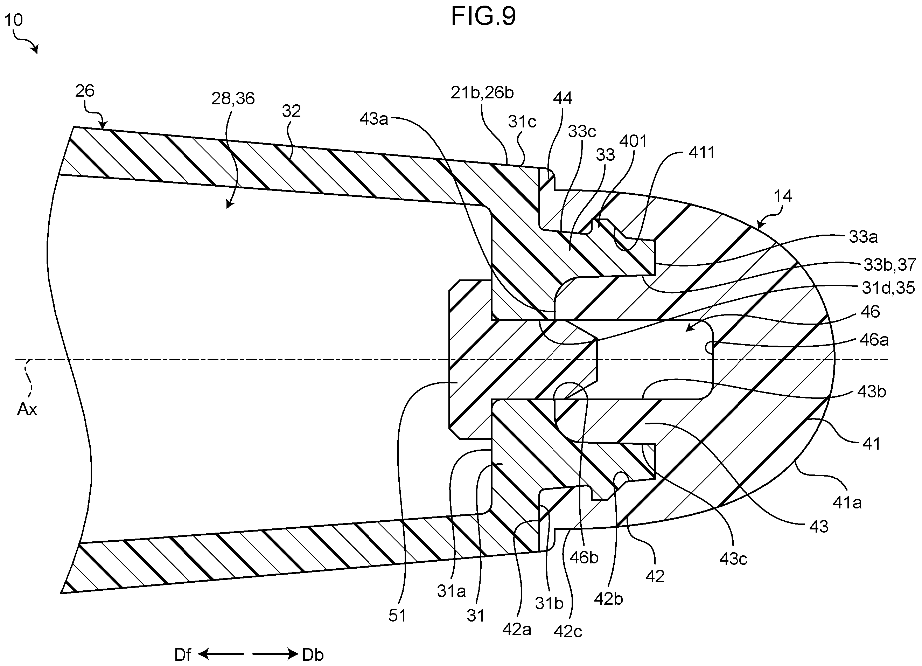

Hereinafter, a fourth embodiment will be described with reference to FIG. 9. FIG. 9 is a cross-sectional view illustrating a periphery of the end 26b of the rear barrel 26 in the writing instrument 10 according to the fourth embodiment. As illustrated in FIG. 9, the rear barrel 26 of the fourth embodiment has a protrusion 401 instead of the protrusion 34. Furthermore, the friction body 14 is provided with a recess 411 instead of the recess 45. The protrusion 401 and recess 411 are substantially equal to the protrusion 34 and recess 45, except as described below.

The protrusion 401 protrudes from the outer peripheral surface 33c of the rear end cylinder 33 at a position spaced apart from the end of the rear end cylinder 33 in the forward direction Df and the backward direction Db. The protrusion 401 has a substantially triangular cross section that tapers toward the backward direction Db. The recess 411 is provided in the inner peripheral surface 42b at a position spaced apart from the end of the outer cylinder portion 42 in the forward direction Df and the backward direction Db. The protrusion 401 is fitted into the recess 411.

When the friction body 14 wears, the outer surface 41a of the head 41 approaches the depression 46 and the end surface 33a of the rear end cylinder 33. Since the protrusion 401 and the recess 411 are away from the end surface 33a in the forward direction Df, it is possible to suppress the protrusion 401 and the recess 411 from being exposed to the outside before the depression 46.

### (Fifth Embodiment)

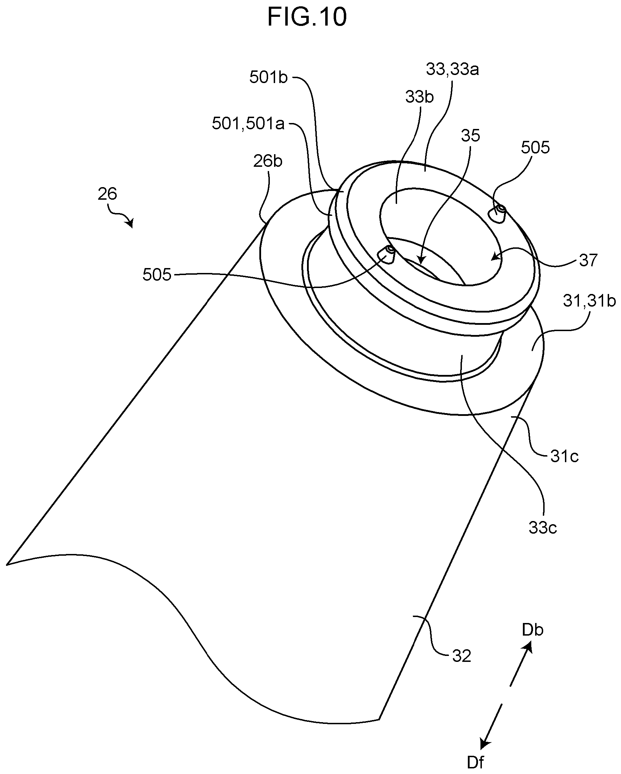

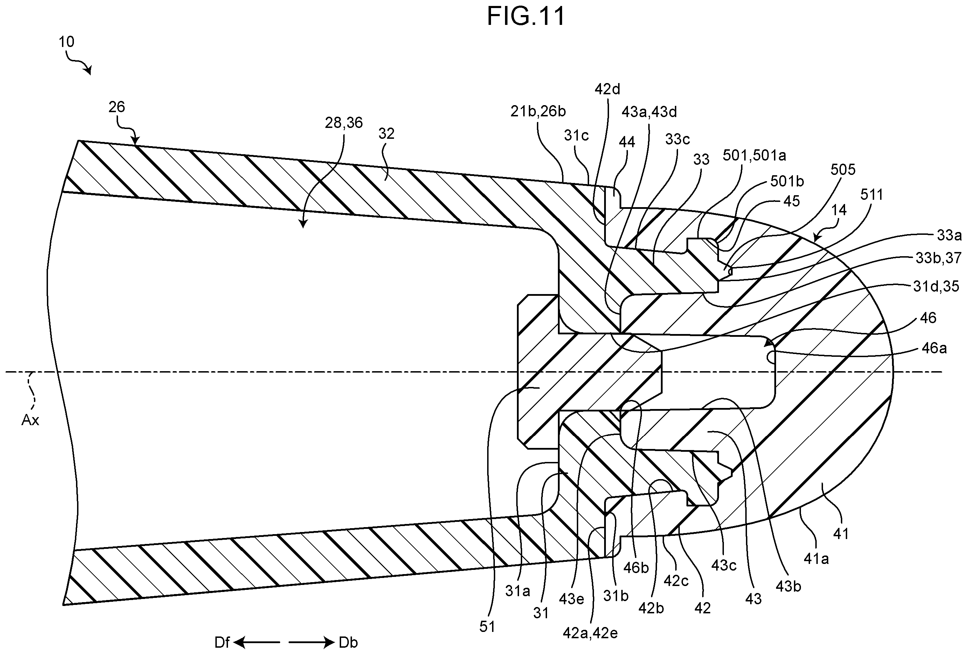

Hereinafter, a fifth embodiment will be described with reference to FIGS. 10 and 11. FIG. 10 is a perspective view illustrating a periphery of the end 26b of the rear barrel 26 according to the fifth embodiment. As illustrated in FIG. 10, the rear barrel 26 of the fifth embodiment has a protrusion 501 instead of the protrusion 34. Furthermore, the rear end cylinder 33 has a plurality of gate marks 505 instead of the two gate marks 33e while omitting the notch 38. The gate mark 505 is an example of a second protrusion. The protrusion 501 and the gate mark 505 are substantially equal to the protrusion 34 and the gate mark 33e, except as described below.

The protrusion 501 has a side surface 501a and a curved surface 501b. The side surface 501a is provided at an end of the protrusion 501 on the outer side in the radial direction. The side surface 501a is formed in a cylindrical shape extending around the central axis Ax.

The curved surface 501b is provided at a corner between the end surface 33a of the rear end cylinder 33 and the side surface 501a of the protrusion 501. In other words, in the rear barrel 26, a corner portion between the end surface 33a of the rear end cylinder 33 and the side surface 501a of the protrusion 501 is rounded. This improves fluidity (moldability) of resin during molding of the friction body 14.

FIG. 11 is a cross-sectional view illustrating a periphery of the end 26b of the rear barrel 26 in the writing instrument 10 of the fifth embodiment. As illustrated in FIG. 11, the curved surface 501b is continuous with the end surface 33a such that a tangent line at one end of the curved surface 501b extends along the end surface 33a. Still more, the curved surface 501b is continuous with the side surface 501a such that a tangent line at the other end of the curved surface 501b extends along the side surface 501a.

Each of the plurality of gate marks 505 protrudes in the backward direction Db from the end surface 33a of the rear end cylinder 33. The gate mark 505 is formed, for example, by injecting a material from the gate 67 that is a pinpoint gate (pin gate) into the mold 60. A diameter of the gate mark 505 may be set to be larger than a diameter needed for the flow of the material.

The friction body 14 of the fifth embodiment is provided with a plurality of recesses 511. The recess 511 is an example of a second recess. The recess 511 is recessed in the backward direction Db from the end of the head 41 in the forward direction Df.

The recess 511 has a shape corresponding to the gate mark 505. Each of the plurality of gate marks 505 fits into a corresponding one of the plurality of recesses 511. As a result, the gate marks 505 restrict relative rotation of the friction body 14 about the central axis Ax with respect to the rear barrel 26.

As described above, the recess 511 that is recessed from the head 41 is provided in the friction body 14. The rear barrel 26 has the gate mark 505 that protrudes from the rear end cylinder 33 and is fitted into the recess 511 to restrict the rotation of the friction body 14, with respect to the rear end cylinder 33, about the central axis Ax of the rear end cylinder 33. As a result, the writing instrument 10 of the present embodiment can simplify the mold 60 and can suppress displacement of the friction body 14 with respect to the rear barrel 26.

Still more, the curved surface 501b continuous with the end surface 33a and the side surface 501a is provided at the corner portion between the end surface 33a of the rear end cylinder 33 and the side surface 501a of the protrusion 501. Accordingly, when the friction body 14 is formed, a material of the friction body 14 can smoothly flow along the curved surface 501b. Therefore, moldability of the friction body 14 is improved. On the other hand, as in the first embodiment, the rear end cylinder 33 and the protrusion 501 suppress elastic deformation of the friction body 14 that causes displacement in the rotation direction Dr, thereby suppressing peeling of the outer cylinder portion 42 and the inner cylinder portion 43 from the outer surface 31b of the end wall 31.

### (Sixth Embodiment)

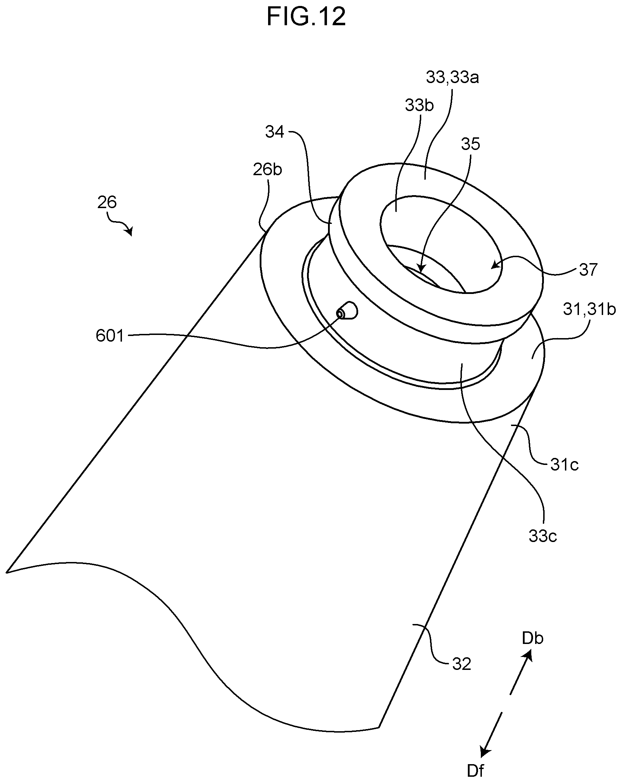

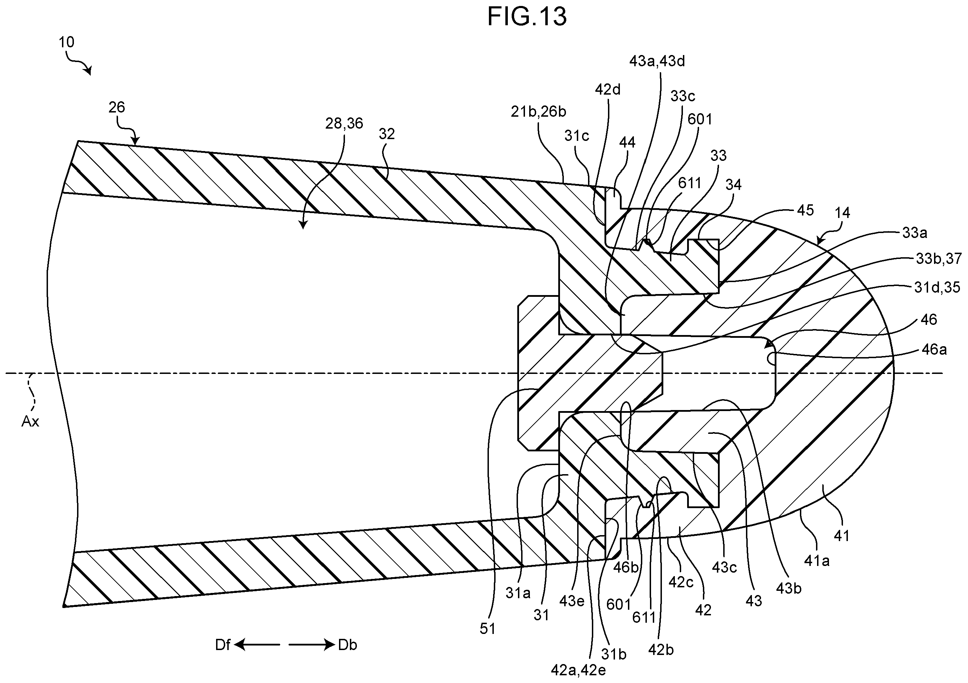

Hereinafter, a sixth embodiment will be described with reference to FIGS. 12 and 13. FIG. 12 is a perspective view illustrating a periphery of the end 26b of the rear barrel 26 according to the sixth embodiment. As illustrated in FIG. 12, the rear end cylinder 33 of the sixth embodiment has a plurality of gate marks 601 instead of the two gate marks 33e while omitting the notch 38. The gate mark 601 is an example of the second protrusion. The gate mark 601 is substantially equal to the gate mark 33e, except as described below.

Each of the plurality of gate marks 601 protrudes outward in the radial direction from the outer peripheral surface 33c of the rear end cylinder 33. The gate mark 601 is formed, for example, by injecting a material from the gate 67, which is a tunnel gate (submarine gate), into the mold 60.

FIG. 13 is a cross-sectional view illustrating a periphery of the end 26b of the rear barrel 26 in the writing instrument 10 of the sixth embodiment. As illustrated in FIG. 13, the friction body 14 of the sixth embodiment is provided with a plurality of recesses 611. The recess 611 is an example of the second recess.

The recess 611 is recessed from the inner peripheral surface 42b of the outer cylinder portion 42. The recess 611 has a shape corresponding to the gate mark 601. Each of the plurality of gate marks 601 fits into a corresponding one of the plurality of recesses 611. As a result, the gate mark 601 restricts relative rotation of the friction body 14 about the central axis Ax with respect to the rear barrel 26.

As described above, the recess 611 that is recessed from the outer cylinder portion 42 is provided in the friction body 14. The rear barrel 26 has the gate mark 601 that protrudes from the rear end cylinder 33 and is fitted into the recess 611 to restrict the rotation of the friction body 14, with respect to the rear end cylinder 33, about the central axis Ax of the rear end cylinder 33. As a result, the writing instrument 10 of the present embodiment can simplify the mold 60 and can suppress displacement of the friction body 14 with respect to the rear barrel 26.

In the above embodiments, the plug 51 seals the through hole 35. However, the plug 51 may be omitted. In this case, since the barrel 11 and the friction body 14 are made of a material having a high gas barrier property (low gas permeability), it is possible to suppress evaporation of ink moisture from the ink occluding body 12.

The above-described embodiments of the present invention do not limit the scope of the invention, and are merely examples included in the scope of the invention. In an embodiment of the present invention, for example, at least a portion of the specific application, structure, shape, operation, and effect may be changed, omitted, or added to the above-described embodiments without departing from the gist of the invention.

## Claims

1. A stationery item comprising:
a member including an end wall, a first cylinder protruding from the end wall in a first direction, and a second cylinder protruding from the end wall in a second direction opposite to the first direction, the end wall being provided with a through hole allowing communication between a space inside the first cylinder and a space inside the second cylinder; and
a friction body including a base in contact with an end of the second cylinder in the second direction, an outer portion extending from the base, surrounding the second cylinder, and in contact with the end wall and the second cylinder, and an inner portion extending from the base, surrounded by the second cylinder, and in contact with the end wall and the second cylinder, the friction body being capable of inducing a thermochromic change in handwriting written with a thermochromic ink by frictional heat generated by rubbing the handwriting written with the thermochromic ink.

2. The stationery item according to claim 1, wherein
the member includes a first protrusion protruding from the second cylinder in a direction intersecting the second direction at a position spaced apart from the end wall in the second direction and fitted into a first recess provided in the outer portion.

3. The stationery item according to claim 1, wherein
the friction body is provided with a depression extending across the base and the inner portion and communicating with the through hole.

4. The stationery item according to claim 1, further comprising:
a plug configured to seal the through hole.

5. The stationery item according to claim 4, wherein
the friction body is permeable to gas.

6. The stationery item according to claim 1, wherein
the member and the friction body are integrally formed by double-molding.

7. The stationery item according to claim 1, wherein
the member is provided with a notch recessed from the second cylinder, and
the friction body is fitted into the notch to be restricted from rotating about a central axis of the second cylinder with respect to the second cylinder.

8. The stationery item according to claim 1, wherein
the friction body is provided with a second recess recessed from the base, the outer portion, or the inner portion, and
the member includes a second protrusion protruding from the second cylinder and fitted into the second recess to restrict the friction body from rotating about a central axis of the second cylinder with respect to the second cylinder.
